# EUROPEAN PATENT APPLICATION

(11) **EP 1 859 899 A1**
(43) Date of publication of application: **28.11.2007**
(21) Application number: 07108429.7
(22) Date of filing: 17.05.2007
(51) Int. Cl.: B24B 23/02, B24B 45/00, B27B 5/32, F16D 13/54

(54) **Clamp assembly for retaining an accessory on a spindle**

(30) Priority: 22.05.2006 US 438622 P
(71) Applicant: Black & Decker, Inc., Newark, DE 19711 (US)
(72) Inventor: Miller, Philip T., Phoenix, PA 21131 (US); Nickels, Richard C., Hampstead, MD 21074 (US); Sheddy, Gregg L., Shrewsbury, PA 17361 (US)
(74) Representative: Bell, Ian Stephen

(57) **Abstract**

A clamping assembly is provided for retaining an accessory (16) on the spindle of a power tool. The clamp assembly preferably includes a planetary gear system (102) for transmitting torque applied to the clamp assembly to the accessory, wherein the planetary gear system multiplies the torque transmitted to the accessory so that the torque transmitted to the accessory is greater than the torque applied to the clamp assembly. An extendable lever (160) or a handle may also be included for increasing the amount of torque applied to the clamp assembly by the user. A clutching system (106) may also be employed to prevent the user from over tightening the clamp assembly

## Description

The present invention generally relates to the field of power tools, and more particularly, to a clamp assembly for securing a cutting, polishing, or grinding accessory to the spindle of a power tool.

Power tools such as chop saws, circular saws, miter saws, angle grinders, radial arm saws, table saws, and the like use a cutting, polishing, or grinding accessory to perform a desired Operation on a workpiece. The accessory generally comprises a substantially circular disc having a surface for grinding or polishing or a cutting surface that may include teeth to perform the desired Operation on the workpiece. The accessory typically includes a central aperture through which the accessory is clamped to the motor Output shaft or spindle of the power tool.

The process of installing or removing the accessory can be difficult and time consuming because of the components and tools involved. Typically, the accessory is placed on the spindle of the power tool with the inner surface of the accessory placed against a flange provided on the power tool spindle. A second flange is then placed against the outer surface of the accessory, and a fastening bolt is threaded into a threaded hole in the spindle through the apertures formed in the accessory and the flanges. The spindle is then held stationary (e.g., by engaging a pin with the motor shaft or using a specially designed tool) and a wrench is used to tighten the fastening bolt within the threaded hole, clamping the accessory between the flanges.

Consequently, it has long been desirable to provide a clamping assembly that allows accessories to be installed or removed quickly without the use of additional tools such as wrenches.

Accordingly, the present invention relates to a clamp assembly for retaining an accessory on the spindle of a power tool. In an exemplary embodiment, the clamp assembly includes a planetary gear System for transmitting torque applied to the clamp assembly to the accessory, wherein the planetary gear System multiplies the torque transmitted to the accessory so that the torque transmitted to the accessory is greater than the torque applied to the clamp assembly. An extendable lever or a handle may also be included for increasing the amount of torque applied to the clamp assembly by the user. A clutching System may also be employed to prevent the user from over tightening the clamp assembly.

Further areas of applicability of the present invention will become apparent from the detailed description provided hereinafter. It should be understood that the detailed description and specific examples, while indicating the preferred embodiment of the invention, are intended for the purposes of illustration only and are not intended to limit the scope of the invention.

The numerous advantages of the present invention may be better understood by those skilled in the art by reference to the accompanying figures in which:
FIGS. 1A and 1B is an isometric view illustrating exemplary power tools employing accessory clamp assemblies according to the principles of the present invention;
FIG. 2 is an exploded isometric view illustrating components of an accessory clamp assembly according to the principles of the present invention;
FIG. 3 is a cross-sectional side view of the accessory clamp assembly shown in FIG. 2;
FIG. 4 is an exploded isometric view illustrating components of a second accessory clamp assembly according to the principles of the present invention;
FIG. 5 is a cross-sectional side view of the clamp assembly shown in FIG. 4;
FIG. 5A is a partial cross-sectional side view accessory detailing a portion of the clamp assembly shown in FIG. 5.

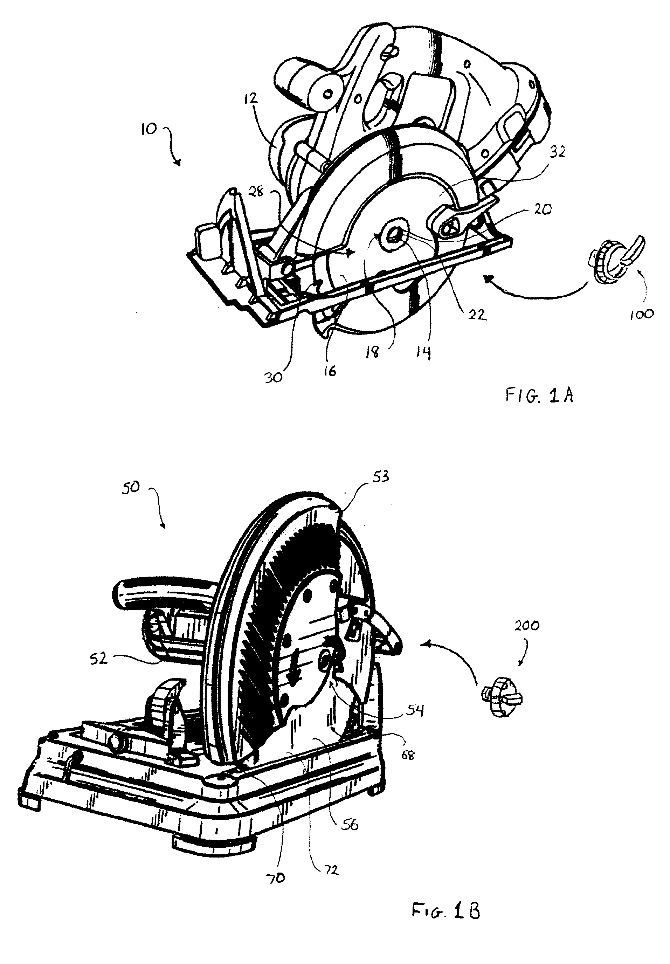

Referring to FIGS. 1A and 1B, exemplary power tool 10 employing accessory clamp assembly 100 in accordance with the present invention is shown. Power tool 10, in this case a circular saw, preferably includes a motor assembly 12 having a spindle 14 on which an accessory 16 may be mounted. In this exemplary embodiment, a saw blade is shown, however, it is readily appreciated that any appropriate power tool accessory known in the art can be used. The spindle 14 is preferably provided with a flange 18 against which the inner surface 20 of the accessory 16 may abut. In another preferred embodiment, instead of a flange 18, a washer may be provided to support the inner surface of the accessory 16. A spindle lock mechanism is also preferably provided to hold the spindle 14 stationary (e.g., by engaging a pin with the motor shaft or the like) when the accessory clamp assembly 100 is threaded into a threaded hole 22 formed within the spindle 14. Preferably, the accessory clamp assembly 100 multiplies the torque that a user is capable of applying by hand to provide sufficient axial or clamping force to the accessory 16 to adequately secure the accessory 16 to the spindle 14. The accessory clamp assembly 100 thus allows an accessory 16 to be affixed to the spindle 14 of the power tool 10, without the need of an additional tool such as a wrench, which are typically required by prior art clamping assemblies. Preferably, the accessory clamp assembly 100 is well balanced and has minimal protruding surfaces.

With continued reference to FIGS. 1A and 1B, exemplary power tool 50 employing accessory clamp assembly 200 in accordance with the present invention is shown. Power tool 50, in this case a chop saw, preferably includes a motor assembly 52 having a spindle 54 (located under guard 53) on which an accessory 56 may be mounted. In this exemplary embodiment, a cutting wheel is shown, however, it is readily appreciated that any appropriate power tool accessory known in the art can be used. The spindle 54 is preferably provided with a flange 58 (also located under guard 53) against which the inner surface of the accessory 56 may abut. In another preferred embodiment, instead of a flange 58, a washer may be provided to support the inner surface of the accessory 56. A spindle lock mechanism is also preferably provided to hold the spindle 54 stationary (e.g., by engaging a pin with the motor shaft or the like) when the clamp assembly 50 is threaded into a threaded hole 62 (also located under guard 53) formed within the spindle 54. Preferably, the accessory clamp assembly 200 multiplies the torque that a user is capable of applying by hand to provide sufficient axial or clamping force to the accessory 56 to adequately secure the accessory 56 to the spindle 54. The accessory clamp assembly 200 thus allows an accessory 56 to be affixed to the spindle 54 of the power tool 50, without the need of an additional tool such as a wrench, which are typically required by prior art clamping assemblies.

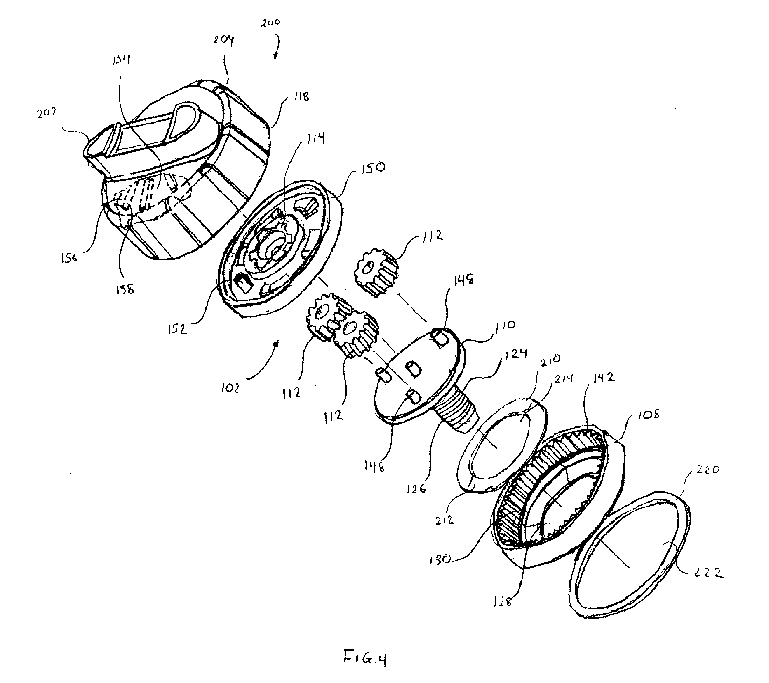

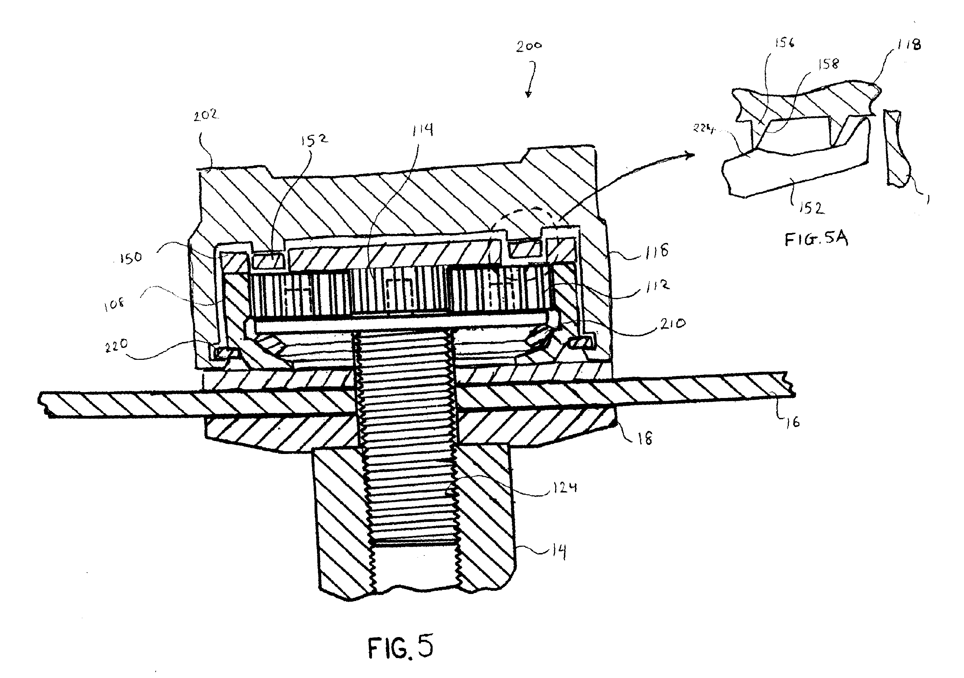

FIGS. 1 through 5A illustrate accessory clamp assemblies 100 and 200 in accordance with preferred embodiments of the present invention. In each embodiment, the accessory clamp assemblies 100 and 200 preferably employ a planetary gear system 102 for multiplying the torque applied to clamp the accessories 16 and 56 to the spindles 14 and 54 of the power tools 10 and 50, shown in FIGS. 1A and 1B. Preferably, the accessory clamp assemblies 100 and 200 are suitable for use with any accessory commonly used in power tools such as miter saws, hand held circular saws, angle grinders, radial arm saws, table saws, and the like. Such accessories typically include a disk having a cutting, polishing, or grinding surface for performing an Operation on a work piece and a central aperture through which the accessory is clamped to the spindle of the power tool. In one of the preferred embodiments illustrated in FIGS. 1A and 1B, the accessory 16 shown comprises a circular saw blade 28 of the type having a plurality of cutting teeth 30 arranged about a planar disk 32. This saw blade 28 is an example of the types of accessories that may be used with the accessory clamp assembly 100. In another of the preferred embodiments illustrated in FIGS. 1A and 1B, the accessory 56 shown comprises a cutting disc 68 of the type having a cutting surface 70 arranged about a planar disk 72. This cutting disc 68 is another example of the types of accessories that may be used with the clamp assembly 200. Nevertheless, it will be appreciated by those of ordinary skill in the art that the present invention is not limited to use with any particular accessory, and that accessories suitable for use with the present invention may employ a wide variety of designs depending on the Operation or cut to be performed by the power tool.

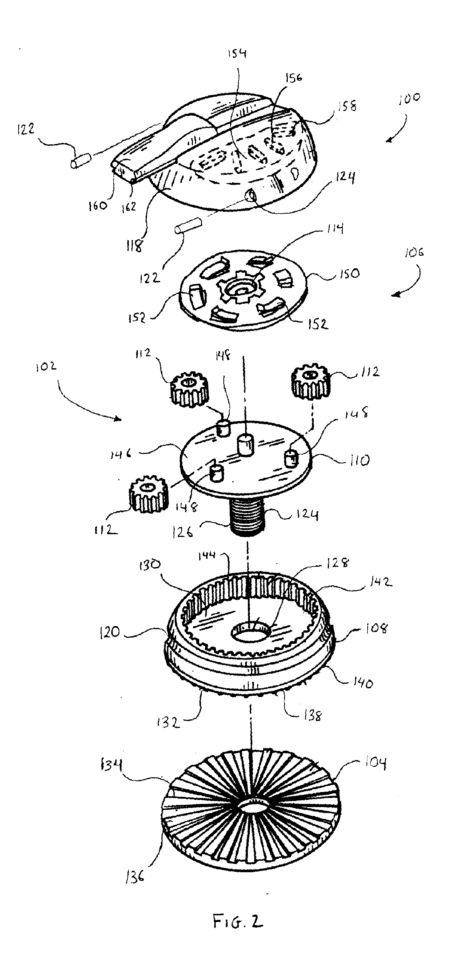

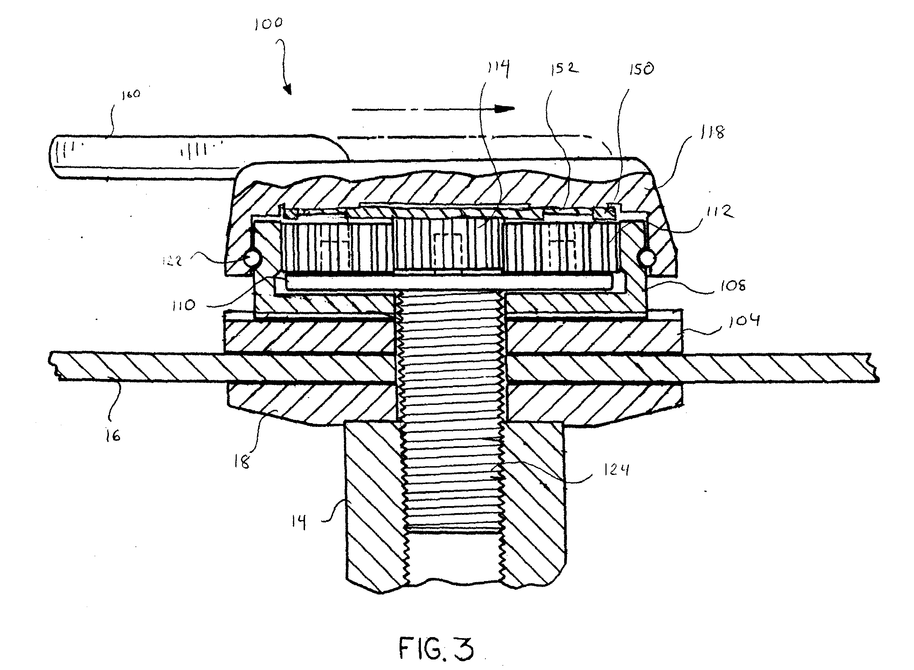

In the preferred embodiment shown in FIGS. 2 and 3, the accessory clamp assembly 100 preferably comprises a washer 104 for engaging the accessory 16 to hold the accessory 16 against the flange 18 and a clamp assembly threaded into the threaded hole 22 formed in the spindlel4 for clamping the washer 104 against the accessory 16. In a preferred embodiment, the washer 104 includes surface texturing. The planetary gear system 102 contained within the clamp assembly 106 transmits torque applied to the clamp assembly 106 to the washer 104, multiplying the torque transmitted to the washer 104, so that the torque transmitted to the washer 104 is greater than the torque applied to the clamp assembly 106 by the user.

The clamp assembly 106 preferably includes a body 108, a bolt assembly 110 located within the body 108, a planet gear assembly 102 including a plurality of planet gears 112 and a sun gear 114 contained within the body 108 (three planet gears are provided in the embodiments illustrated) and a cap 118. In the preferred embodiment, the outer surface of the body 108 includes a groove or Channel 120 shaped to provide engagement between the body 108 and the cap 118 via pins 122 inserted in apertures 124 in the cap 118 so that the pins 122 slide in the Channel 120 and retain the cap 118 to the body 108 while allowing the cap 118 to rotate with respect to the body 108. However, those of ordinary skill in the art will appreciate that the cap 118 may be secured to the body 108 in other ways without departing from the scope and spirit of the present invention. However, the securing method used should not unduly interfere with rotation of the cap 118 on the body 108, although some interference may be desirable, such as frictional interference or the like, for preventing unwanted movement of the cap 118.

The bolt assembly 110 is preferably seated in the body 108 and includes a spindle bolt 124 having threads 126. The spindle bolt 124 preferably extends through an aperture 128 formed in the bottom 130 of the body 108 for coupling the blade clamp assembly 100 to the spindle 14 of the power tool (e.g., power tool 10 shown in FIGS. 1A and 1B). The planetary gear system 102 transmits torque applied to the cap 118 to the bolt assembly 110 for threading the spindle bolt 124 into the threaded hole 22 formed in the spindle 14, multiplying the torque transmitted to the bolt assembly 110 so that the torque transmitted to the spindle bolt 124 is greater than the torque applied to the capl 18.

In a preferred embodiment, the power tool 10 may include a spindle locking mechanism (not shown) that, when depressed by the user, engages a hole formed in the motor Output drive shaft or spindle 14 of the power tool 10 to lock the spindle 14 in place. The spindle 14 is then prevented from spinning as the cap 118 is rotated by the user for tightening or loosening the clamp assembly 100, thereby clamping the accessory 16 against the flange 18 of the spindle 14 or releasing the accessory from the flange 18.

As shown in FIGS. 2 and 3, in a preferred embodiment, the outer surface 132 of the bottom 130 of the body 108 is seated against the textured surface 134 of the washer 104. The textured surface 134 of the washer 104 preferably includes a plurality of ridges 136 that are received in corresponding slots 138 between keys 140 formed in the outer surface 132 of the bottom 130 of the body 108 thereby interlocking the washer 104 and the body 108 as the clamp assembly 100 is tightened against the accessory 16. Accordingly, seating of the washer 104 against the accessory 16 preferably secures the body 108 through the interaction of the ridges 136 formed on the washer 104 with the slots 138 formed in the body 108.

In a preferred embodiment, the planetary gear System 102 further includes a ring gear 142 formed on an inner side surface 144 of the body 108. The planet gears 112 of the planet gear assembly 102 orbit about the sun gear 114 within the ring gear 142. In a preferred embodiment, shown in FIGS. 2 and 3, the bolt assembly 110 comprises a carrier 146 which includes a plurality of circumferentially spaced pins 148 (three pins 148 are illustrated) on which the planet gears 112 rotate, while the sun gear 114 is fixedly attached to a clutch plate 150.

The clutch plate 150 preferably includes a plurality of biasing arms 152 that are configured and dimensioned to be positioned in a recess 154, located between the plurality of engagement members 156. As the cap 118 is rotated by the user, the biasing arms 152 abut the sloped surfaces 158 of the engagement members 156. This causes the clutch plate 150 to rotate, turning the sun gear 114, which turns the planet gears 112 and rotates the carrier 146, which in turn rotates the spindle bolt 124 for threading the spindle bolt 124 into the spindle 14.

In a preferred embodiment, the gear teeth of the planet gears 112 are enmeshed between the gear teeth of the sun gear 114 and the gear teeth of the ring gear 142. Preferably, the planet gears 112 are rotationally connected to the pins 148 so that the planet gears 112 rotate while orbiting between the sun gear 114 and the ring gear 142 when the cap 122 is rotated by the user. The planet gears 112 rotate and orbit, causing the bolt assembly 110 to rotate in the same direction as the cap 118, though at a slower rate. In this manner, the spindle bolt 124, which is threaded to the spindle 14, rotates when the cap 118 is rotated, compressing accessory 16 between the washer 104 and the spindle flange 18 thereby securing the accessory 16 to the spindle 14. Alternately, when the cap 118 is rotated in the opposing direction, the bolt assembly 110 also rotates in the opposing direction, loosening the spindle bolt 124 from the spindle and unclamping the accessory 16 so that the accessory 16 may be released from the spindle 14.

Preferably, the size and pitch of the gear teeth of the planet gears 112, the sun gear 114 and the ring gear 142 are selected along with the respective diameters of the cap 118, the planet gears 112 and the body ring gear 142 to provide the desired torque multiplication. However, it will be appreciated by those of skill in the art that the present invention need not be limited to the configuration specifically disclosed herein. For example, it is contemplated that additional layers of planet gears may be provided without departing from the scope and spirit of the present invention.

The planetary design of the present invention is capable of providing a large torque advantage compared to a conventional hand-tightened spindle bolt since the torque applied to the spindle bolt 124 by hand-tightening the cap 118 may be multiplied many times over that which is typically applied by a user's hand. Those of ordinary skill in the art will appreciate that the torque magnification factor of the present invention will depend upon the size of the parts, pitch diameters chosen for the parts, and the like. In the case of a conventional power tool, such as power tool 10, for example, parts may be chosen for enabling a person of ordinary physical strength to hand-tighten the accessory clamp assembly 100 sufficiently to provide adequate axial force for retaining the accessory 16 against the flange 18 of the spindle 14. This may be desirable because the human hand is not typically capable of applying the needed torque for sufficiently tightening a conventional hex-head-type blade clamp assembly without the use of hand tools, such as wrenches, or the like, to provide the necessary additional mechanical advantage.

In embodiments of the present invention, the cap 118 further includes an extensible lever 160 for providing additional mechanical advantage for tightening the accessory clamp assembly 100 onto the spindle 14. In the embodiment illustrated in FIGS. 1 through 3, the extensible lever 160 is slidably received in the cap 118 via a groove and rail assembly 162 and includes a raised portion suitable for being pushed by a user to extend the extensible lever 160 outward from the cap 118. In this manner, the lever may be used to provide additional mechanical advantage for tightening and loosening the accessory clamp assembly 100 while still providing a balanced assembly clamping the accessory 16 against the spindle 14 as the accessory 16 is rotated. Although an extensible lever 160 is described in the exemplary embodiments illustrated herein, those of ordinary skill in the art will appreciate that many other configurations for aiding in the rotation of the cap 118 may be provided without departing from the scope and intent of the present invention. For example, extensible levers 160 may be provided that pivot away from the cap 118, or rotate outward from the cap 118, or notches or ridges may be placed about the exterior of the cap 118 for providing friction against a tightening or loosening force applied by the fingers of an Operator.

In accordance with an exemplary embodiment of the present invention, to install an accessory 16 onto the spindle 14 of the power tool 10, the accessory 16 is first placed on the spindle 14 against the spindle flange 18. The washer 104 is then placed on the spindle 14 against the accessory 16 with ridges or keys 136 facing outward away from the accessory 16. The spindle bolt 124 of the clamp assembly 112 is next threaded into the threaded hole 22 of the spindle 14 and the clamp assembly 112 is spun on until the spindle bolt 124 is hand tight. As the spinning body 108 of the clamp assembly 112 advances against the washer 104 and the keys 136 and 140 of the washer 104 and the body 108 mesh, the body 108 of the clamp assembly 112 stops rotating. The spindle lock (not shown) of the power tool is then engaged to prevent rotation of the spindle 14. Next, the extensible lever 160 is manually extended and used to rotate the cap 118, driving the cap 118 about the center axis of the spindle bolt 124. As the cap 118 is rotated, the torque from the cap 118 is transmitted through the sloped surfaces 158 of the engagement members 156 and the biasing arms 152 to the clutch plate 150 and the planetary gear System 102. The planetary gear system 102 multiplies the torque applied to the lever 160, causing the thread of the spindle bolt 124 to advance into the threaded hole 22 formed in the spindle 14 and forcing the body 108 against the washer 104 which is, in turn, forced against accessory 16 clamping the accessory 16 between the washer 104 and the flange 18 of the spindle 16. As the torque applied reaches a certain pre-set level, the biasing arms 152 deflect away from the sloped surfaces 158 of the engagement members 156, disengaging the cap 118 from the rest of the of the clamp assembly, allowing the cap 118 to rotate relative to the clutch plate 150, effectively stopping the transmission of torque from the cap to the rest of the clamp assembly. This clutching limits the torque to a pre-set value to prevent over tightening of the accessory clamp assembly 100 and produces a ratcheting noise providing the user with audible feedback that the clamping assembly is properly tightened. After the accessory clamp assembly 100 is tightened, the extensible lever 160 is slid back into the cap 118. In an another preferred embodiment, the lever 160 may be spring biased to automatically retract back into the cap 118 once the user is finished tightening the accessory clamp assembly 100. Removal of the accessory clamp assembly 100 for replacing accessory 16 is accomplished by reversing this process.

Turning to FIGS. 3-5A, a second preferred embodiment of the accessory clamp assembly 200 is shown. Like components are similarly numbered as in FIGS. 1 and 2 and will not be discussed again. In addition, the attachment and removal process of the second preferred embodiment is similar to the first preferred embodiment.

In this preferred embodiment, cap 118 preferably includes a fixed handle 202 that extends from the cap 118 along with surface groves 204 to assist the user in rotating the clamp assembly 200. A wear ring 220 is also preferably included to assist in holding the clamp assembly 200 together.

In addition, accessory clamp assembly 200 preferably includes a loading system that provides an axial loading force to keep the planetary gear system 102 engaged at all times during the rotation of the accessory clamp assembly 200, during the tightening and loosening processes. In a preferred embodiment, the loading system includes a biasing element 210 and biasing arms 152 having a cam profile 224 to engage at least two of the engagement members 156 on cap 118.

The biasing element 210 preferably is a cone washer and provides axial loading by providing a downward biasing force against the body 108 and an upward biasing force against the bolt assembly 110. The axial loading prevents the cap 118 from rotating with the body 108 by creating a frictional force between the biasing element 210 and the body 108 preventing the body 108 from rotating when the user rotates the accessory clamp assembly 200 to either install the assembly 200 or remove the assembly 200. By preventing the cap 118 and the body 108 from rotating together, the planetary gear system 102 remains engaged. In other preferred embodiments, the biasing element 210 may be a spring washer, a flat washer, a wavy washer or a composite washer and the biasing element 210 may be placed in other locations within accessory clamp assembly 200.

In addition, in a preferred embodiment, during the Installation process, when the accessory clamp assembly 200 is tightened such that it abuts the accessory 16, continued tightening of the accessory clamp assembly 200 will result in compression of the biasing element 210. With the biasing element 210 fully compressed, it will no longer provide axial loading or a frictional force, however, the accessory 16 abutting against the body 108 will provide the requisite frictional force to prevent the body 108 from rotating with the cap 118.

The cam profile 224 is configured and dimensioned so that the biasing arm 152 is always slightly deflected by an engagement member 156 creating axial loading. This axial loading is transmitted to the body 108 to assist in preventing the body 108 from rotating with the cap 118 when the user rotates the accessory clamp assembly 200 to either install the assembly 200 or remove the assembly 200. Again, by preventing the cap 118 and the body 108 from rotating together, the planetary gear system 102 remains engaged.

It is believed that the present invention and many of its attendant advantages will be understood by the foregoing description, and it will be apparent that various changes may be made in the form, construction and arrangement of the components thereof without departing from the scope and spirit of the invention or without sacrificing all of its material advantages. The form herein before described being merely an explanatory embodiment thereof.

## Claims

1. An accessory clamp assembly for retaining an accessory on a spindle of a power tool, comprising:
a washer for engaging the accessory to hold the accessory on the spindle; and
a clamp assembly for being threaded into the spindle to clamp the washer against the accessory, the assembly including a planetary gear System for transmitting torque applied to the assembly to the washer and including a clutch system to limit the torque applied to the assembly to the washer,
wherein the planetary gear system multiplies the torque transmitted to the washer so that the torque transmitted to the washer is greater than the torque applied to the clamp assembly, and
wherein the clutch system limits the torque transmitted to the washer to a pre-determined amount to prevent over-tightening of the clamp assembly and accessory on the spindle.

2. The accessory clamp assembly of claim 1, further comprising a lever extensible from the clamp assembly for increasing the amount of torque applied to the clamp assembly.

3. The accessory clamp assembly of claim 1, wherein the clamp assembly comprises:
a body;
a clutch plate having a sun gear;
a bolt assembly located within the body, the bolt assembly includes a threaded bolt extending from the bolt body for being threaded into the spindle and a carrier for supporting at least one planet gear;
at least one planet gear engaged with the sun gear and the body;
a cap coupled to the body, the cap engaging the clutch plate for driving the clutch plate and the sun gear,
wherein the sun gear rotates the at least one planet gear for rotating the carrier and turning the bolt assembly.

4. The accessory clamp assembly of claim 3, wherein the cap further comprises at least one engagement member.

5. The accessory clamp assembly of claim 4, wherein the clutch plate further comprises at least one biasing arm configured and dimensioned to engage the at least one engagement member.

6. The accessory clamp assembly of claim 5, wherein the at least one biasing arm will disengage from the at least one engagement member when the toque applied to the cap exceeds a pre-determined amount.

7. The accessory clamp assembly of claim 3, wherein the body includes a keyed bottom surface and the washer includes a textured upper surface for engaging the keyed bottom surface of the housing.

8. The accessory clamp assembly of claim 3, wherein the body further comprises a ring gear for engaging the at least one planet gear.

9. A power tool having an accessory, comprising:
a motor;
a spindle rotated by the motor for supporting the accessory; and
an accessory clamp assembly for retaining the accessory on the spindle, the accessory clamp assembly comprising:
a washer for engaging the accessory to hold the accessory on the spindle; and
a clamp assembly for being threaded into the spindle to clamp the washer against the accessory, the assembly including a planetary gear system for transmitting torque applied to the assembly to the washer and including a clutch system to limit the torque applied to the assembly to the washer,
wherein the planetary gear system multiplies the torque transmitted to the washer so that the torque transmitted to the washer is greater than the torque applied to the clamp assembly, and
wherein the clutch system limits the torque transmitted to the washer to a pre-determined amount to prevent over-tightening of the clamp assembly and accessory on the spindle.

10. The power tool of claim 9, further comprising a lever extensible from the clamp assembly for increasing the amount of torque applied to the clamp assembly.

11. The accessory clamp assembly of claim 9, wherein the clamp assembly comprises:
a body;
a clutch plate having a sun gear;
a bolt assembly located within the body, the bolt assembly includes a threaded bolt extending from the bolt body for being threaded into the spindle and a carrier for supporting at least one planet gear;
at least one planet gear engaged with the sun gear and the body;
a cap coupled to the body, the cap engaging the clutch plate for driving the clutch plate and the sun gear,
wherein the sun gear rotates the at least one planet gear for rotating the carrier and turning the bolt assembly.

12. The accessory clamp assembly of claim 11, wherein the cap further comprises at least one engagement member.

13. The accessory clamp assembly of claim 12, wherein the clutch plate further comprises at least one biasing arm configured and dimensioned to engage the at least one engagement member.

14. The accessory clamp assembly of claim 13, wherein the at least one biasing arm will disengage from the at least one engagement member when the toque applied to the cap exceeds a pre-determined amount.

15. The accessory clamp assembly of claim 9, wherein the body includes a keyed bottom surface and the washer includes a textured upper surface for engaging the keyed bottom surface of the housing.

16. The accessory clamp assembly of claim 9, wherein the body further comprises a ring gear for engaging the at least one planet gear.

17. An accessory clamp assembly for retaining an accessory on a spindle of a power tool, comprising:
a clamp assembly for being threaded into the spindle to clamp the accessory onto the spindle, the assembly including a planetary gear system for transmitting torque applied to the assembly to the accessory and including a clutch system to limit the torque applied to the assembly to the accessory,
wherein the planetary gear System multiplies the torque transmitted to the accessory so that the torque transmitted to the accessory is greater than the torque applied to the clamp assembly, and
wherein the clutch system limits the torque transmitted to the accessory to a pre-determined amount to prevent over-tightening of the clamp assembly and accessory on the spindle.

18. The accessory clamp assembly of claim 17, wherein the clamp assembly comprises:
a body;
a wear ring;
a biasing element for providing axial loading to the clamp assembly;
a clutch plate having a sun gear;
a bolt assembly located within the body, the bolt assembly includes a threaded bolt extending from the bolt body for being threaded into the spindle and a carrier for supporting at least one planet gear;
at least one planet gear engaged with the sun gear and the body;
a cap coupled to the body, the cap engaging the clutch plate for driving the clutch plate and the sun gear,
wherein the sun gear rotates the at least one planet gear for rotating the carrier and turning the bolt assembly.

19. The accessory clamp assembly of claim 18, wherein the cap further comprising surface grooves and a handle extending from the cap for increasing the amount of torque applied to the clamp assembly.

20. The accessory clamp assembly of claim 18, wherein the cap further comprises at least one engagement member.

21. The accessory clamp assembly of claim 19, wherein the clutch plate further comprises at least one biasing arm configured and dimensioned to engage the at least one engagement member.

22. The accessory clamp assembly of claim 21, where in the at least one biasing arm includes a cam profile for providing axial loading to the clamp assembly.

23. The accessory clamp assembly of claim 20, wherein the at least one biasing arm will disengage from the at least one engagement member when the toque applied to the cap exceeds a pre-determined amount.

24. The accessory clamp assembly of claim 18, wherein the body further comprises a ring gear for engaging the at least one planet gear.
